# EUROPÄISCHE PATENTANMELDUNG

(11) **EP 2 377 781 A2**
(43) Veröffentlichungstag der Anmeldung: **19.10.2011**
(21) Anmeldenummer: 11003150.7
(22) Anmeldetag: 14.04.2011
(51) Int. Cl.: B65G 1/04

(54) **Regallager mit Regalbediengerät**

(30) Priorität: 16.04.2010 AT 6182010
(71) Anmelder: LTW Intralogistics GmbH, 6961 Wolfurt (AT)
(72) Erfinder: Gerber, Urs, 6900 Bregenz (AT); Eberle, Konrad, 6900 Bregenz (AT)
(74) Vertreter: Gangl, Markus

(57) **Zusammenfassung**

Regallager (10) mit mindestens zwei zwischen Regalen liegenden Regalgassen (1, 2) und darin verfahrbaren Regalbediengeräten (3, 4), wobei für jede Regalgasse (1, 2) eine Übergabestelle (Ü1, Ü2) vorgesehen ist, von der aus bzw. auf die die Regalbediengeräte (3, 4) Lagergut (5) aufnehmen bzw. abgeben, wobei direkt neben der Übergabestelle (Ü1) der ersten Regalgasse (1) eine quer über die erste Regalgasse (1) aufschlagbare, den Verfahrweg des in der ersten Regalgasse (1) verfahrenden Regalbediengeräts (3) kreuzende und zwischen den Regalen liegende Förderbrücke (6) vorgesehen ist, über die Lagergut (5) von bzw. zur Übergabestelle (Ü2) der zweiten Regalgasse (2) verbringbar ist.

## Beschreibung

Die Erfindung betrifft ein Regallager mit mindestens zwei zwischen Regalen liegenden Regalgassen und darin verfahrbaren Regalbediengeräten, wobei für jede Regalgasse eine Übergabestelle vorgesehen ist, von der aus bzw. auf die die Regalbediengeräte Lagergut aufnehmen bzw. abgeben. Weiters betrifft die Erfindung ein Regalbediengerät für ein solches Regallager sowie ein Verfahren zum Be- und Entladen von Lagergut in einem Regallager.

Moderne Regallager bieten für Tausende von palettierten Lagergütern Lagerplatz, wobei zwischen den einzelnen Lagerplätzen Regalgassen bzw. Gänge freigelassen sind, in denen Regalbediengeräte für ein meist voll automatisches Be- und Entladen der Stellplätze mit Lagergütern sorgen. Dabei ist für jedes Regalbediengerät in jeder Regalgasse eine separate Übergabestelle vorgesehen, auf welches bzw. von welchem Lagergut auf ein jeweils der Regalgasse zugeordnetes Förderband auf- bzw. abgeladen werden kann.

Um diesen Vorgang zu verbessern, ist beispielsweise aus der EP 0 407 703 A1 bekannt, während der Warenübergabe vom Förderband auf das erste Regalbediengerät am Regalbediengerät eine Umlagerung vorzunehmen.

Aus der EP 2 052 994 A1 ist eine Weiterleitungsvorrichtung zwischen zwei Förderbändern bekannt, wobei die Weiterleitungsvorrichtung dazu dient, eine Palette auf ein Shuttlefahrzeug zu überführen.

Aus der EP 0 961 743 B1 ist ein Schlitten bekannt, der ein Fahrzeug aufnimmt, wobei der Schlitten zwei solche Fahrzeuge aufnehmen kann und jedes Fahrzeug mit einer Palette versehen ist.

Die EP 0 442 000 A1 zeigt ein Regallager mit mehreren Regalgassen mit darin verfahren Regalbediengeräten und Übergabestellen. Entlang der Stirnseite des Regallagers verläuft ein langer Förderer, der Lagergut zu den Übergabestellen transportiert. Dabei müssen die Förderanlagen relativ platzintensiv um die Regale herumgeführt werden, was zudem kostenintensiv ist und eine längere Förderzeit für das Lagergut bedeutet.

Vor allem, wenn mehrere Regalgassen vorgesehen sind, stellt sich das Problem, wie Lagergut am effizientesten von einer meist in der Nähe der ersten Regalgasse angeordneten zentralen An- und Auslieferungsstelle für das gesamte Regallager zur zweiten, dritten, vierten usw. Regalgasse verbracht werden kann. Dazu ist bei vielen Regallagern für das Zubringen und Herausbringen von Lagergut eine Hauptförderanlage, die von der einzigen, zentralen An- und Auslieferungsstelle bedient wird, vorgesehen. Im Regallager zweigt sich dann diese Hauptförderanlage in mehrere Förderanlagen auf, die teilweise relativ umständlich und aufwändig zu den einzelnen Regalgassen führen, von welchen ein in der jeweiligen Regalgasse vorgesehenes Regalbediengerät das Lagergut über Übergabestellen entsprechend abladen bzw. abholen kann.

Als Lösung ist dazu aus dem Stand der Technik beispielsweise bereits bekannt, dass das erste Regalbediengerät das Lagergut direkt oder über ein Zwischenförderband zum zweiten Regalbediengerät reicht. Allerdings kann währenddessen das erste Regalbediengerät nicht seiner eigentlichen Aufgabe - die erste Regalgasse zu bedienen - nachkommen.

Die Aufgabe der Erfindung besteht daher darin, ein gegenüber dem Stand der Technik verbessertes Regallager anzugeben. Insbesondere sollen die umständlichen, kostenintensiven und oft relativ langen Förderanlagen zu den weiter entfernten Regalgassen vermieden werden. Zudem soll das erste Regalbediengerät möglichst effizient und multifunktionell engesetzt werden können. Bevorzugt soll die Zeit, in der das erste Regalbediengerät an der Übergabestelle der ersten Regalgasse steht, dazu benutzt werden, um Lagergut zu einem zweiten Regalbediengerät weiterleiten zu können.

Diese Aufgabe wird dadurch gelöst, dass direkt neben der Übergabestelle der ersten Regalgasse eine quer über die erste Regalgasse aufschlagbare Förderbrücke vorgesehen ist, über die Lagergut von bzw. zur Übergabestelle der zweiten Regalgasse verbringbar ist, wobei die Förderbrücke den Verfahrweg des Regalbediengeräts kreuzt und zwischen den Regalen aufschlagbar ist. Dadurch kann im Bereich der Übergabestelle der ersten Regalgasse Lagergut auch für die zweite Regalgasse relativ rasch zur bzw. von der Hauptförderanlage weitergeleitet werden. Durch die Querung der ersten Regalgasse mittels der Brücke wird ein umständliches Umleiten der Förderanlage im Regallager vermieden. Durch die erfindungsgemäß aufschlagbare Brücke über die Regalgasse ist es somit einerseits möglich, den Bedarf an Fördermitteln wesentlich zu verringern und die Förderung der Waren weniger umständlich zu gestalten und andererseits dennoch den gesamten Verfahrweg für das Regalbediengerät entlang der Regalgasse zwischen den Regalen uneingeschränkt - auf beiden Seiten der Förderbrücke - nutzen zu können.

Ein bevorzugtes Ausführungsbeispiel der vorliegenden Erfindung kann vorsehen, dass die Förderbrücke von einer aufgeschlagenen, brückenbildenden Position entfernbar ist. Dabei sollte darauf geachtet werden, dass die Förderbrücke nur dann aufgeschlagen ist, wenn das erste Regalbediengerät an der Übergabestelle der ersten Regalgasse oder bei einem Lagerstellplatz steht.

Ein weiteres bevorzugtes Ausführungsbeispiel kann vorsehen, dass zwischen erster und zweiter Regalgasse eine Zwischenförderanlage im Wesentlichen quer zu den Regalgassen angeordnet ist, wobei ein Ende der Zwischenförderanlage die Übergabestelle der zweiten Regalgasse und das andere Ende eine Brückenübergabestelle zur quer über die erste Regalgasse aufschlagbaren Förderbrücke bildet.

Gemäß einer ersten, alternativen Ausführungsvariante der Förderbrücke kann vorgesehen sein, dass die Förderbrücke zwischen der aufgeschlagenen Position und einer eingezogenen Position bewegbar ist, wobei die Förderbrücke von der eingezogenen Position in die aufgeschlagene Position quer über die erste Regalgasse ausfahrbar ist. Beispielhaft sei für eine ausfahrbare Förderbrücke auf die WO 2006/068443 A1 verwiesen. Um Unfälle oder Zusammenstöße durch das mit hohen Gewichten beladene und relativ schnell durch die Regalgasse fahrende Regalbediengerät zu verhindern, kann bevorzugt vorgesehen sein, dass das in der ersten Regalgasse vorgesehene Regalbediengerät nur bei eingezogener Position der Förderbrücke ungehindert in der ersten Regalgasse verfährt. Dazu kann eine Steuerung oder Regelung die entsprechenden Vorgänge überwachen. Die Brücke selbst kann dabei beispielsweise von beiden Seiten der Regalgasse ein- und ausfahrbar hineinragen.

Um dieses Sicherheitsproblem zu vermeiden, kann gemäß einer zweiten, alternativen aber bevorzugten Ausführungsvariante der Förderbrücke der vorliegenden Erfindung vorgesehen sein, dass die Förderbrücke mit dem in der ersten Regalgasse vorgesehenen ersten Regalbediengerät mit fährt. Bevorzugt ist dabei die Förderbrücke am ersten Regalbediengerät angeordnet bzw. direkt mit diesem verbunden. Dadurch kann das erste Regalbediengerät, während es seiner Tätigkeit des Be- und Entladens vom Lagergut von der ersten Übergabestelle nachkommt, über die mitgeführte Brücke sozusagen als Verbindungsglied für die Förderanlage der zweiten Regalgasse dienen.

Um ein noch schnelleres Ein- und Auslagern und eine effizientere Zeitnützung zu gewährleisten, kann bevorzugt vorgesehen sein, dass die Übergabestellen, vorzugsweise übereinander angeordnet, jeweils eine Abgabestelle für abzugebendes Lagergut und eine Annahmestelle für anzunehmendes Lagergut aufweisen. Durch diese doppelstöckige Anordnung können die einzelnen, meist palettierten Lagergüter auf einer Ebene Richtung Ausgang geführt werden und auf der anderen Ebene gleichzeitig Richtung Stellplatz verfahren werden. Wie an sich bekannt, können die Regalbediengeräte jeweils eine Fördereinrichtung zum Ein- und Auslagern des Lagerguts aufweisen.

Aus dem Stand der Technik sind bereits Regalbediengeräte zum meist schienengeführten Verfahren in einer Regalgasse eines Regallagers bekannt, wobei das Regalbediengerät ein Fahrgestell und eine (erste) mit dem Fahrgestell verbundene Fördereinrichtung zum Ein- und Auslagern von Lagergut umfasst.

Um ein solches Regalbediengerät in einem erfindungsgemäßen Regallager einsetzen zu können, ist gemäß unabhängigem Anspruch 12 eine zweite, vorzugsweise parallel zur ersten ausgerichtete, Fördereinrichtung vorgesehen, die eine mit dem Fahrgestell verbundene Förderbrücke zum Verbringen von Lagergut quer über die Regalgasse bildet. Somit dient dieses Regalbediengerät einerseits dem Bedienen der ersten Regalgasse und andererseits als Verbindungsteil der Förderanlage für die zweite Regalgasse.

Besonders bevorzugt kann dazu vorgesehen sein, dass die zweite Fördereinrichtung zwei vorzugsweise übereinander angeordnete, in entgegengesetzte Richtungen fördernde Förderbrücken bildet. Als Weiterbildung kann vorgesehen sein, dass das Regalbediengerät weitere Brücken als Verbindungsstück für eine dritte und vierte Förderanlage mitführt bzw. aufweist.

Schutz wird auch begehrt für ein Verfahren zum Be- und Entladen von Lagergut in einem Regallager, wobei während vom in der ersten Regalgasse vorgesehenen ersten Regalbediengerät Lagergut von bzw. aus der Übergabestelle der ersten Regalgasse aufgenommen bzw. abgegeben wird gleichzeitig über die direkt neben der Übergabestelle der ersten Regalgasse aufgeschlagene Förderbrücke Lagergut von bzw. zur Übergabestelle der zweiten Regalgasse verbracht wird. Durch diese gleichzeitig möglichen Tätigkeiten ist ein gegenüber dem Stand der Technik viel effizienteres Verfahren zum Be- und Entladen von Lagergut in einem Regallager verwirklicht. Bevorzugt kann vorgesehen sein, dass für ein solches Verfahren ein Regalbediengerät nach Anspruch 12 oder 13 eingesetzt wird.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
Fig. 1 schematisch ein Regallager nach dem Stand der Technik,
Fig. 2 schematisch ein erfindungsgemäßes Regallager,
Fig. 3 in einer Seitendarstellung ein Regalbediengerät,
Fig. 4 einen Ausschnitt aus Fig. 2 mit eingezeichnetem Schnitt A-A,
Fig. 5 ein Detail aus Fig. 4 und
Fig. 6 den Schnitt A-A durch das Regallager gemäß Fig. 4.

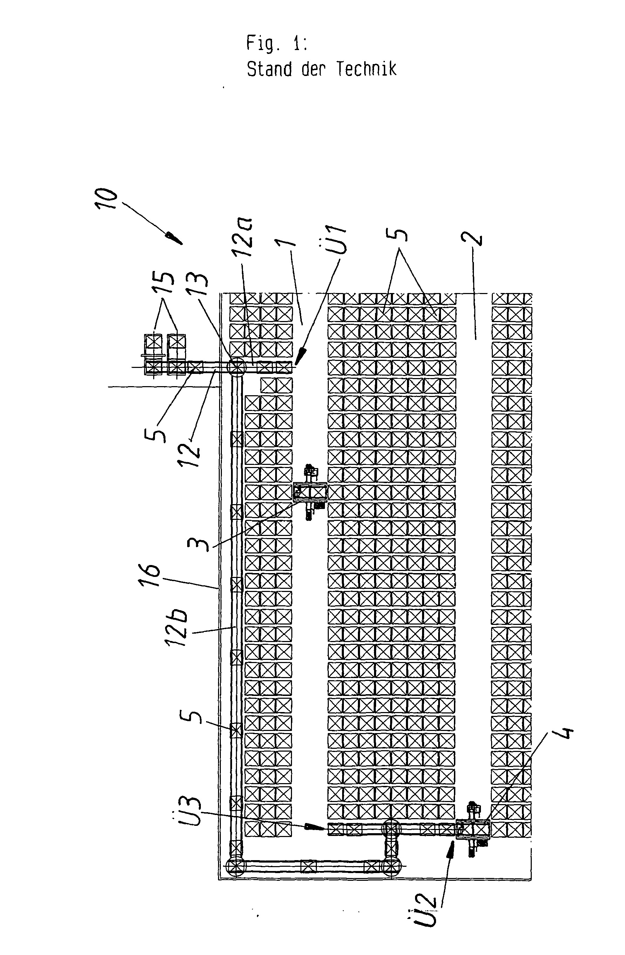

Fig. 1 zeigt ein Regallager 10 nach dem Stand der Technik, wobei in der ersten Regalgasse 1 das erste Regalbediengerät 3 auf einer nicht dargestellten Schiene verfahren werden kann. Dieses Regalbediengerät 3 kann über eine an sich bekannte Fördereinrichtung 8 Lagergüter 5 im Hochregal positionieren oder von diesem holen und entsprechend zu einer Übergabestelle Ü1 der ersten Regalgasse 1 liefern. Von dieser Übergabestelle Ü1 gelangt beim Entladen das Lagergut 5 über die der ersten Regalgasse 1 zugeordnete Förderanlage 12a über die Kreuzungsstelle 13 zur Hauptförderanlage 12 und von dort weiter zur An- und Auslieferungsstelle 15. Von der Kreuzungsstelle 13 zweigt eine weitere Förderanlage 12b ab, die relativ lang und umständlich entlang der Regallagerwand 16 bis zur Übergabestelle Ü2 für die Regalgasse 2 führt. Von dieser Übergabestellte 2 kann ein Regalbediengerät 4 für die zweite Regalgasse Lagergut 5 auf- bzw. abnehmen. Um den umständlichen und langen Weg für das Lagergut 5 entlang der Förderanlage 12b abzukürzen, ist aus dem Stand der Technik bekannt eine Übergabestelle Ü3 vorzusehen, von bzw. zu welcher das erste Regalbediengerät 3 Lagergut 5 mitnehmen kann. Während das erste Regalbediengerät 3 allerdings diese Arbeit durchführt, kann es nicht für seinen eigentlichen Einsatzzweck - die Bedienung des ersten Regallagers 1 - eingesetzt werden.

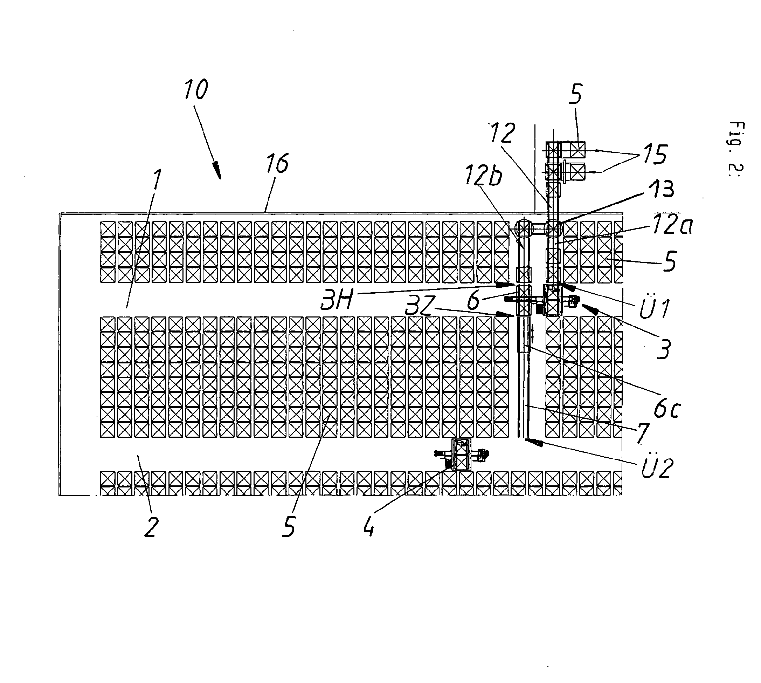

Um nun die aus dem Stand der Technik hervorgehenden Nachteile zu vermeiden, ist in Fig. 2 die erfindungsgemäße Lösung für ein verbessertes Regallager 10 dargestellt. In dieser Fig. 2 sind auch die beiden möglichen alternativen oder gleichzeitig einsetzbaren Varianten der Brückenbildung 6 dargestellt. In der bevorzugten Variante weist das erste Regalbediengerät 3 nicht nur die Fördereinrichtung 8 zum Ein- und Auslagern von Lagergut 5 in der ersten Regalgasse 1 auf, sondern auch eine Brücke 6 als sozusagen mitfahrendes Förderanlageverbindungsstück auf. Dadurch kann - während das Regalbediengerät 3 an der Übergabestelle Ü1 steht - direkt daneben über die Brücke 6 Lagergut 5 von der mit der Übergabestelle Ü2 für die Regalgasse 2 verbundene Zwischenförderanlage 7 quer zur Regalgasse 1 geschleust werden. Aus dieser Fig. 2 sind die zwei wesentlichen Vorteile der vorliegenden Erfindung ersichtlich, wonach gegenüber dem Stand der Technik viel weniger Förderanlagen 12 im Regallager 10 installiert sein müssen und vom Regalbediengerät 3 zwei Arbeiten gleichzeitig übernommen werden können. Im Bereich der Brückenübergabestelle BZ von der Zwischenförderanlage 7 auf die Brücke 6 kann als Alternative - beispielsweise wenn das Regalbediengerät 3 gewartet wird - eine verschiebbare Brücke 6c mit darauf angeordneter Fördereinrichtung 9 zum Verbinden mit der Förderanlage 12b vorgesehen sein.

In Fig. 2 sind auch der erste und der zweite Förderweg ersichtlich. Der erste Förderweg führt von der An- und Auslieferungsstelle 15 zur Übergabestelle Ü1 und wird von der Förderanlage 12, der Kreuzungsstelle 13 und der Förderanlage 12a gebildet. Der zweite Förderweg führt von der An- und Auslieferungsstelle 15 zur Übergabestelle Ü2 für die zweite Regalgasse 2 und wird von der Förderanlage 12, der Kreuzungsstelle 13, der Förderanlage 12b, der Förderbrücke 6 und der Zwischenförderanlage 7 gebildet.

Jede Regalgasse 1 bzw. 2 bildet im Wesentlichen auf Ihrer gesamten Länge den Verfahrweg für ein Regalbediengerät 3. Dieser Verfahrweg wird von der Förderbrücke 6 bzw. vom zweiten Förderweg gekreuzt. Dadurch wird der Verfahrweg in einen ersten, vor der Brücke 6 liegenden Verfahrweg und einen zweiten, nach der Brücke 6 liegenden Verfahrweg unterteilt.

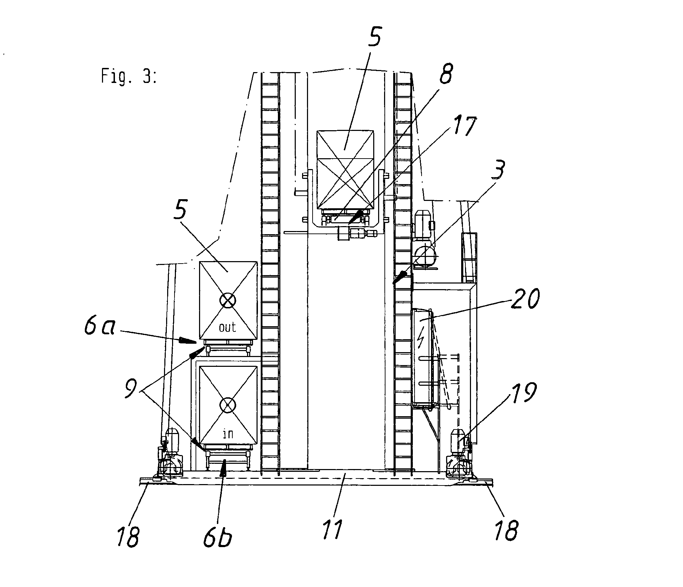

Fig. 3 zeigt eine Seitenansicht des in der ersten Regalgasse 1 verfahrbaren und multifunktionell einsetzbaren ersten Regalbediengeräts 3. Im unteren Bereich ist dabei das Fahrgestell 11 des Regalbediengerätes 3 dargestellt, welches über Antriebsmotoren 19 entlang der am Boden der Regalgasse 1 des Regallagers 10 montierten Schiene 18 verfahren werden kann. Dieses Regalbediengerät 3 weist als Hauptkomponente die Fördereinrichtung 8 auf, welche beispielsweise über einen Hubschlitten 17 in der Höhe verfahren werden kann und das Lagergut 5 quer zur Regalgasse 1 ein- und ausladet. Das gesamte Regalbediengerät 3 kann von einer Steuer- oder Regeleinheit 20 gesteuert oder geregelt werden. Zusätzlich ist am Fahrgestell 11 des Regalbediengerätes 3 eine doppelstöckige zweite Fördereinrichtung 9 vorgesehen, welche einerseits eine Brücke 6a bildet, die mit einer entsprechenden Abgabestelle "out" hin zur Brückenübergabestelle BH mit der Förderanlage 12b korrespondiert, während die Förderbrücke 6b mit der Annahmestelle "in" korrespondiert. Natürlich kann auch die Fördereinrichtung 8 doppelstöckig ausgebildet sein.

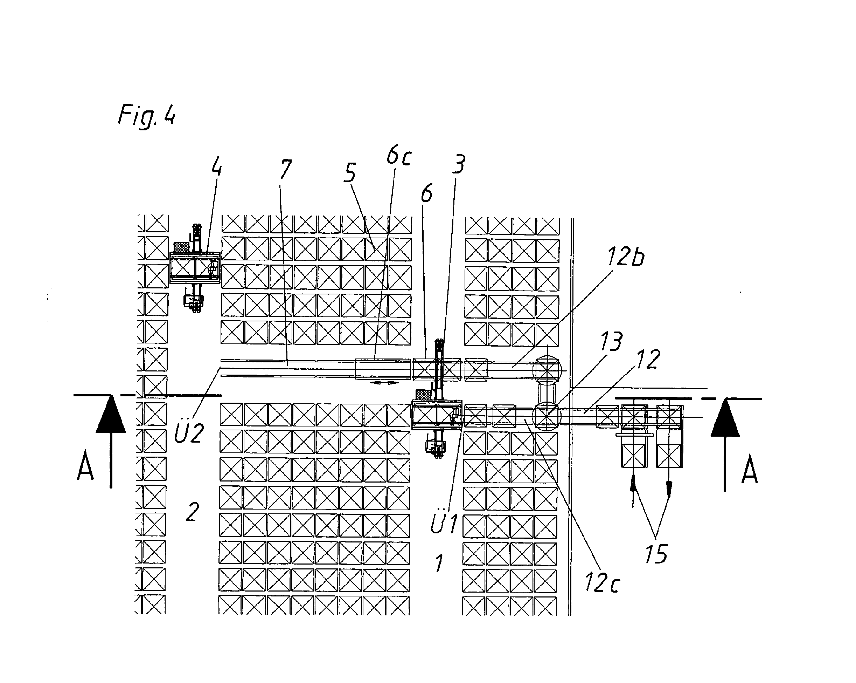

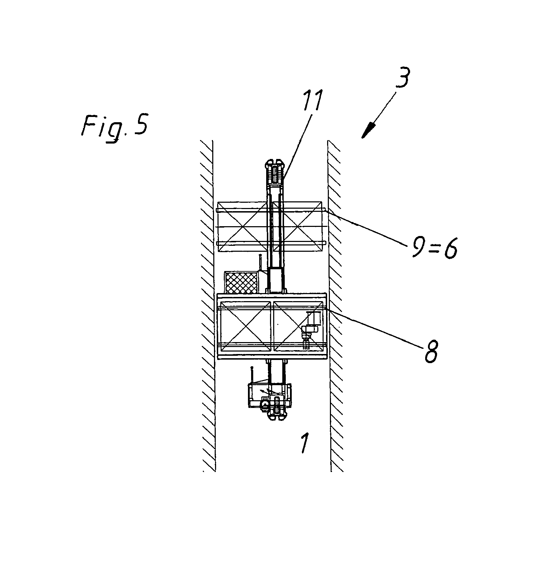

Fig. 4 und 5 zeigen im Detail in Draufsicht das Regalbediengerät 3, wobei in Fig. 4 dieses Regalbediengerät 3 an der Übergabestelle Ü1 positioniert ist, während direkt daneben die mitfahrende Brücke 6 Lagergut 5 zwischen Förderanlage 12b und Zwischenförderanlage 7 hin- und hertransportiert. Natürlich soll für die Erfindung nicht ausgeschlossen werden, dass die Brücke 6 an einer nicht direkt an die Übergabestelle Ü1 angrenzenden Stelle der Regalgasse 1 angeordnet ist. Jedoch ist es - wenn die Brücke 6 als Mitfahrbrücke ausgebildet ist - von großem Vorteil, wenn diese Positionen möglichst nahe beieinander liegen, da ansonsten das Regalbediengerät 3 unnötig lang ausgebildet sein müsste. "rDirekt neben" gemäß Anspruch 1 bedeutet, dass höchstens ca. drei Lagerstellplätze zwischen Übergabestelle Ü1 und Förderbrücke 6 liegen.

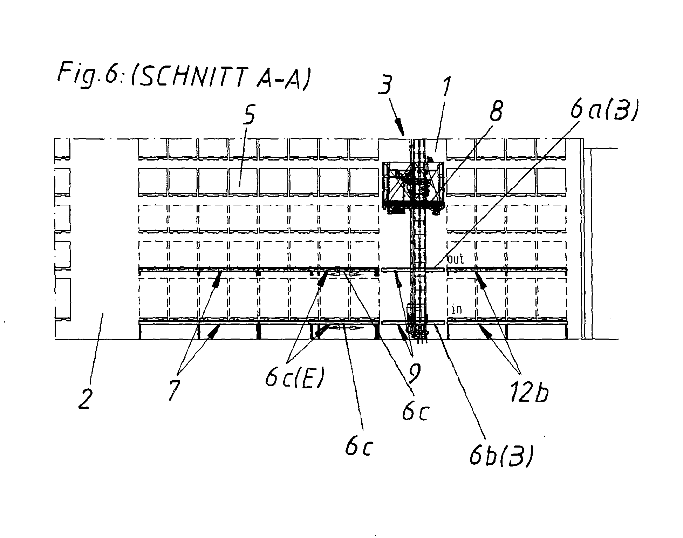

Fig. 6 zeigt nochmals im Schnitt A-A die ausfahrbaren Brücken 6c in eingezogener Position E, wobei die Fördereinrichtung 8 des Regalbediengeräts 3 in angehobener Position steht und die Brücke 6a und 6b bzw. dessen Fördereinrichtungen 9 in brückenbildender Position B der Förderanlagenverbindung dienen.

Durch die hier vorliegende Erfindung ist somit ein Regallager gezeigt, bei dem im Bereich der Übergabeposition Ü1 der Regalgasse 1 eine Brücke 6 zur Regalgasse 2 geschlagen wird - entweder durch eine mit dem Regalbediengerät 3 mitgenommene Brücke 6a und 6b samt Fördereinrichtung 9 oder durch eine separate ausfahrbare Brücke 6c samt Fördereinrichtung 9, die beispielsweise von beiden Seiten der Regalgasse 1 jeweils zur Hälfte die Regalgasse 1 überbrücken kann. Dies hat gegenüber dem Außenherumführen der Förderanlage 12 den Vorteil, dass es baulich einfacher ist. Gegenüber dem Abgeben durch das erste Regalbediengerät 3 besteht ein wesentlicher Zeitvorteil, da zwei Vorgänge gleichzeitig (bevorzugt vom Regalbediengerät 3) durchgeführt werden können, nämlich aus der Regalgasse 1 Lagergut 5 zu ent- und beladen und über die Brücke 6 und dessen Fördereinrichtung 9 Lagergut 5 zur bzw. von der Regalgasse 2 zu fördern. Bei der Ausführung als ausfahrbare Brücke 6c kann vorgesehen sein, dass das Aus- und Einfahren der Brücke 6c von eine Steuer- oder Regeleinheit überwacht. Diese erlaubt den ausgefahrenen Zustand nur dann, wenn das Regalbediengerät 3 nicht den von der Brücke 6c mitgebildeten zweiten Förderweg kreuzt. D. h., sobald die Steuer- oder Regeleinheit Signale erhält, dass das Regalbediengerät 3 den zweiten Förderweg kreuzen wird, wird ein Einfahr-Signal an die ausfahrbare Brücke 6c übermittelt, sodass sich diese von der ausgefahrenen Positionen in die eingefahrene Position. Kollisionen zwischen dem Regalbediengerät 3 und der ausfahrbaren Brücke 6c werden dadurch vermieden. Bei einer fixen Förderbrücke 6c könnte ein Regalbediengerät 3 gar nicht in beiden Verfahrwegen verfahren. Es könnte nur vorgesehen sein, dass die Brücke 6c oberhalb des Regelbediengeräts angeordnet ist, sodass das Regalbediengerät 3 darunter durchfährt. Dann müsste die Brücke 6c nicht eingefahren werden. Von oben gesehen kreuzt auch dabei die Förderbrücke 6c den Verfahrweg des Regalbediengeräts 3.

Die Ausbildung der einzelnen fördertechnischen Elemente ist für die Erfindung nebensächlich, weshalb dies hier nicht im Detail dargelegt wird. Diesbezüglich sei aber auf den zahlreichen Stand der Technik verwiesen, der diverse Möglichkeiten von Förderanlagen, Förderbändern, Regalbediengeräten, Regalgreifern, Verfahrwägen usw. zeigt. Dasselbe gilt für die Ausgestaltung der einzelnen Hochregale und auch für die Ausbildung und das Ein- und Ausfahren der Brücken. Die Brücken 6c könnten beispielsweise auch in Form eines Teleskoptisches ausgebildet sein.

## Patentansprüche

1. Regallager (10) mit mindestens zwei zwischen Regalen liegenden Regalgassen (1, 2) und darin verfahrbaren Regalbediengeräten (3, 4), wobei für jede Regalgasse (1, 2) eine Übergabestelle (Ü1, Ü2) vorgesehen ist, von der aus bzw. auf die die Regalbediengeräte (3, 4) Lagergut (5) aufnehmen bzw. abgeben, **dadurch gekennzeichnet, dass** direkt neben der Übergabestelle (Ü1) der ersten Regalgasse (1) eine quer über die erste Regalgasse (1) aufschlagbare, den Verfahrweg des in der ersten Regalgasse (1) verfahrenden Regalbediengeräts (3) kreuzende und zwischen den Regalen liegende Förderbrücke (6) vorgesehen ist, über die Lagergut (5) von bzw. zur Übergabestelle (Ü2) der zweiten Regalgasse (2) verbringbar ist.

2. Regallager nach Anspruch 1, **dadurch gekennzeichnet, dass** die Förderbrücke (6) von einer aufgeschlagenen, brückenbildenden Position (B) entfernbar ist.

3. Regallager nach Anspruch 1 oder 2, **dadurch gekennzeichnet, dass** die Förderbrücke (6) nur dann aufgeschlagen ist, wenn das erste Regalbediengerät (3) an der Übergabestelle (Ü1) der ersten Regalgasse (1) steht.

4. Regallager nach einem der Ansprüche 1 bis 3, **gekennzeichnet durch**
- eine An- und Auslieferungsstelle (15) für Lagergut (5),
- einen ersten Förderweg (12, 13, 12a), über den Lagergut (5) zwischen der An- und Auslieferungsstelle (15) und der Übergabestelle (Ü1) für die erste Regalgasse (1) transportierbar ist und
- einen zweiten Förderweg (12, 13, 12b, 6, 7), über den Lagergut (5) zwischen der An- und Auslieferungsstelle (15) und der Übergabestelle (Ü2) für die zweite Regalgasse (2) transportierbar ist,
wobei die Förderbrücke (6) einen Teil des zweiten Förderwegs (12, 13, 12b, 6, 7) bildet.

5. Regallager nach Anspruch 4, **dadurch gekennzeichnet, dass** der erste und zweite Förderweg (12, 13, 12a bzw. 12, 13, 12b, 6, 7) eine gemeinsame, von der An- und Auslieferungsstelle (15) wegführende Hauptförderanlage (12) aufweisen, wobei die Förderanlagen (12a, 12b) der beiden Förderwege (12, 12a bzw. 12, 12b, 6, 7) an einer Kreuzungsstelle (13) von der Hauptförderanlage (12) abzweigen.

6. Regallager nach Anspruch 4 oder 5, **dadurch gekennzeichnet, dass** zwischen erster (1) und zweiter Regalgasse (2) eine den zweiten Förderweg (12, 12b, 6, 7) mitbildende Zwischenförderanlage (7) im Wesentlichen quer zu den Regalgassen (1, 2) angeordnet ist, wobei ein Ende der Zwischenförderanlage (7) die Übergabestelle (Ü2) der zweiten Regalgasse (2) und das andere Ende eine Brückenübergabestelle (BZ) zur quer über die erste Regalgasse (1) aufschlagbaren Förderbrücke (6) bildet.

7. Regallager nach einem der Ansprüche 1 bis 6, **dadurch gekennzeichnet, dass** die Förderbrücke (6) zwischen der aufgeschlagenen Position (B) und einer eingezogenen Position (E) bewegbar ist.

8. Regallager nach Anspruch 7, **dadurch gekennzeichnet, dass** die Förderbrücke (6) von der eingezogenen Position (E) in die aufgeschlagene Position (B) quer über die erste Regalgasse (1) ausfahrbar ist.

9. Regallager nach Anspruch 7 oder 8, **dadurch gekennzeichnet, dass** das in der ersten Regalgasse (1) vorgesehene Regalbediengerät (3) nur bei eingezogener Position (E) der Förderbrücke (6) ungehindert in der ersten Regalgasse (1) verfährt.

10. Regallager nach einem der Ansprüche 1 bis 6, **dadurch gekennzeichnet, dass** die Förderbrücke (6) mit dem in der ersten Regalgasse (1) vorgesehenen ersten Regalbediengerät (3) mit fährt.

11. Regallager nach Anspruch 10, **dadurch gekennzeichnet, dass** die Förderbrücke (6) am ersten Regalbediengerät (3) angeordnet ist.

12. Regalbediengerät (3), insbesondere für ein Regallager (10) nach einem der Ansprüche 1 bis 11, zum insbesondere schienengeführten Verfahren in einer Regalgasse (1) eines Regallagers (10), mit einem Fahrgestell (11) und einer ersten, mit dem Fahrgestell (11) verbundenen Fördereinrichtung (8) zum Ein- und Auslagern von Lagergut (5), **gekennzeichnet durch** eine zweite, vorzugsweise parallel zur ersten ausgerichtete, Fördereinrichtung (9), die eine mit dem Fahrgestell (11) verbundene Förderbrücke (6) zum Verbringen von Lagergut (5) quer über die Regalgasse (1) bildet.

13. Regalbediengerät nach Anspruch 12, **dadurch gekennzeichnet, dass** die zweite Fördereinrichtung (9) zwei vorzugsweise übereinander angeordnete, in entgegengesetzte Richtungen fördernde Förderbrücken (6a, 6b) bildet.

14. Verfahren zum Be- und Entladen von Lagergut (5) in einem Regallager (10) nach einem der Ansprüche 1 bis 11, **dadurch gekennzeichnet, dass** während vom in der ersten Regalgasse (1) vorgesehenen ersten Regalbediengerät (3) Lagergut (5) von bzw. aus der Übergabestelle (Ü1) der ersten Regalgasse (1) aufgenommen bzw. abgegeben wird gleichzeitig über die direkt neben der Übergabestelle (Ü1) der ersten Regalgasse (1) aufgeschlagene Förderbrücke (6) Lagergut (5) von bzw. zur Übergabestelle (Ü2) der zweiten Regalgasse (2) verbracht wird.

15. Verfahren nach Anspruch 14, **dadurch gekennzeichnet, dass** vom Regalbediengerät (3) nach Anspruch 12 oder 13 gleichzeitig sowohl Lagergut (5) mittels der ersten Fördereinrichtung (8) von bzw. aus der Übergabestelle (Ü1) der ersten Regalgasse (1) aufgenommen bzw. abgegeben wird als auch Lagergut (5) über die die Förderbrücke (6) bildende zweite Fördereinrichtung (9) quer über die erste Regalgasse (1) von bzw. zur Übergabestelle (Ü1) der zweiten Regalgasse (2) verbracht wird.
